# EUROPEAN PATENT SPECIFICATION

(11) **EP 2 998 174 B1**
(45) Date of publication and mention of the grant of the patent: **26.06.2019**
(21) Application number: 15180891.2
(22) Date of filing: 13.08.2015
(51) Int. Cl.: B60T 8/17

(54) **ELECTRONIC BRAKE SYSTEM (EBS) UTILIZING INTEGRATED OR NON-INTEGRATED ELECTRONIC TRAILER BRAKE DURING EBS FUNCTIONS**
ELEKTRONISCHES BREMSSYSTEM (EBS) MIT NUTZUNG VON INTEGRIERTER ODER NICHTINTEGRIERTER ELEKTRONISCHER ANHÄNGERBREMSE WÄHREND DER EBS-FUNKTION
SYSTÈME DE FREINAGE ÉLECTRONIQUE (EBS) INTÉGRÉ OU NON INTÉGRÉ UTILISANT UN FREIN DE REMORQUE ÉLECTRONIQUE AU COURS DES FONCTIONS EBS

(30) Priority: 17.09.2014 US 201414488739
(43) Date of publication of application: 23.03.2016
(73) Proprietor: Continental Automotive Systems, Inc., Auburn Hills, MI 48326 (US)
(72) Inventor: Alaspa, Ryan Wayne, SAULT STE MARIE, MI Michigan 49783 (US); Luomaranta, Vesa Vilhelm, Sault Ste. Marie, Ontario P6A5K7 (CA); Mikel, Benjamin, Brimley, MI Michigan 49715 (US)
(74) Representative: Wagner, Philipp

(56) References cited:
- EP-A1- 1 504 975
- EP-A2- 2 774 828
- WO-A1-2014/012609
- DE-A1- 10 040 576
- DE-A1- 10 338 564
- DE-A1-102005 019 276
- US-A1- 2005 178 622

## Description

The invention relates to electronic brakes systems (EBS) for vehicles towing trailers and, more particularly, to an EBS using integrated or non-integrated electronic trailer brake during EBS functions for improved stopping performance. Furthermore, the invention relates to a method of operating a braking system to cause braking of vehicle and a trailer towed by the vehicle.

There are conventional vehicle brake systems that provide electronic trailer braking while stopping in a straight line and apply the electronic trailer brake when stopped on a grade (e.g., Hill Start Assist (HSA)). There are also conventional active electronic brake activations during trailer sway assist (TSA) to dampen the trailer oscillations . However, in vehicles having EBS, these systems do not provide active trailer control during a degraded EBS function (e.g., failed circuit, low vacuum, faded brakes), or panic brake situations (e.g., Hydraulic Brake Assist (HBA)).

WO 2014/012609 A1 shows a method for braking a combination of a plurality of vehicles coupled to one another, wherein the vehicles each have electronically controlled brakes. Also, the vehicles each have a stability system for detecting a tipping danger, wherein if a tipping danger is detected, one or more vehicles are automatically breaked.

Thus, there is a need to provide an EBS system that uses an integrated or non-integrated electronic trailer brake during EBS functions to improving stopping performance, wherein rust on the trailer wheel brakes is cleaned off in an improved manner.

An object of the invention is to fulfill the need referred to above. In accordance with the principles of the present invention, this objective is obtained by a braking system for a vehicle and a trailer being towed by the vehicle according to claim 1 and a method of operating a braking system to cause braking of a vehicle and a trailer being towed by the vehicle according to claim 8. The braking system includes an electronic trailer brake constructed and arranged to control trailer wheel brakes of the trailer, and an electronic brake system (EBS) constructed and arranged to control wheel brakes of the vehicle. The EBS includes at least one circuit constructed and arranged to detect a function of the EBS and, in response to the detected function, to send a request signal to the electronic trailer brake instructing the electronic trailer brake to activate the trailer wheel brakes.

Additionally, the EBS further comprises a trailer pulse recognition circuit constructed and arranged to recognize drive-off of the vehicle with the trailer in tow, and to initiate a second request signal to the electronic trailer brake to cause activation of the trailer wheel brakes for a limited time to clean the trailer wheel brakes and wherein the electronic trailer brake is constructed and arranged to provide a trailer brake output between 0 and 100% and wherein the trailer pulse recognition circuit is constructed and arranged to initiate the second request signal when the vehicle speed is about 15 kph and wherein the electronic trailer brake is constructed and arranged, based on the second request signal, to cause activation of the trailer wheel brakes at a trailer brake output of about 20%.

In accordance with another aspect of the disclosed embodiment, a method of operating a braking system to cause braking of vehicle and a trailer being towed by the vehicle is provided. The braking system includes an electronic trailer brake to control trailer wheel brakes of the trailer, and an electronic brake system (EBS) to control wheel brakes of the vehicle. The method detects a function of the EBS, and in response to the detected function, sends a request signal to the electronic trailer brake instructing the electronic trailer brake to activate the trailer wheel brakes.

Other objects, features and characteristics of the present invention, as well as the methods of operation and the functions of the related elements of the structure, the combination of parts and economics of manufacture will become more apparent upon consideration of the following detailed description and appended claims with reference to the accompanying drawings, all of which form a part of this specification.

The invention will be better understood from the following detailed description of the preferred embodiments thereof, taken in conjunction with the accompanying drawings, wherein like reference numerals refer to like parts, in which:
FIG. 1 is a block diagram of a braking system including a vehicle electronic brake system (EBS) associated with an electronic trailer brake in accordance with an embodiment.
FIG. 2 is a graph showing trailer brake output set to 100% of driver setting when an EBS function flag becomes active, in accordance with an embodiment.
FIG. 3 is a graph showing a drive off pulse check occurs as the vehicle/trailer drive off, in accordance with an embodiment.

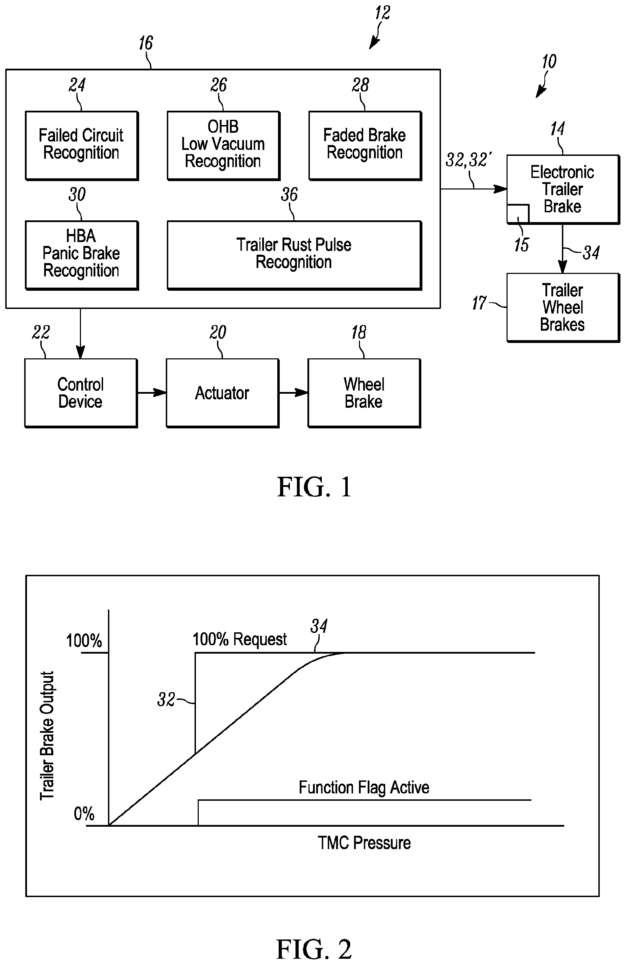

With reference to FIG. 1 and in accordance with an embodiment, a braking system is shown, generally indicated at 10, including a vehicle electronic brake system (EBS), generally indicated at 12, which is associated with an electronic trailer brake 14. The electronic trailer brake 14 is conventional and includes a trailer brake controller device 15 that is an electronic device or module and is typically located in the tow vehicle. However, the controller device 15 could be located in the trailer. The controller device 15 is constructed and arranged to control the operation of trailer wheel brakes 17 by executing various electronic instructions, for example by processor circuit and/or a logic circuit of the controller device 15. Because the individual hardware components and the overall arrangement of a brake controller are generally known in the art, a detailed description of such has been omitted. Typically, trailer brake force is a function of the master cylinder (TMC) pressure and as TMS pressure increases, the controller device 15 increases the braking force to be applied by the trailer wheel brakes 17. This is a driver set value.

The EBS 12 of system 10 includes a central control unit ECU 16 and at least one electrically actuable brake 18 which can be actuated by an actuator 20 that is controlled or regulated by a control device 22. In the example in FIG. 1, one wheel brake 18 having an associated actuator 20 and an associated control device 22, is shown. However, a wheel brake 18, associated actuator 20 and control device 22 can be provided for other wheels of the vehicle. The central control unit ECU 16 is connected to the control device(s) for causing actuation of the actuator(s) 20. Based on information and requests present at the control unit ECU 16, such as driver braking wish, demands of a slip control system (ABS: antilock system, TCS: traction control system) or driver assistance system (ESC: electronic stability control), a decision on a desired control mode is made by the ECU 16 and is transmitted to the control device(s) 22 in the conventional manner.

The ECU 16 includes a plurality of brake function evaluation circuits such as a failed circuit recognition circuit 24 that determines whether the EBS 12 is functioning properly (e.g., detects a failed circuit in the EBS), an Optimized Hydraulic Boost (OHB) low vacuum recognition circuit 26 that determines whether a low engine vacuum condition exists, a faded brake recognition circuit 28 that determines whether a faded brake condition exists, and a Hydraulic Brake Assist (HBA) panic brake recognition circuit 30 that determines whether an emergency or panic braking condition exists. If any of the above-mentioned conditions is detected by the circuits, 24, 26, 28, or 30, the detecting circuit sends a request signal 32 to the integrated or non-integrated electronic trailer brake 14 to cause a trailer brake output 34 to be 100% of the value set by the driver. Thus, the trailer brake 14 causes the trailer wheel brakes 17 to provide maximum braking force (as previously set by the driver) to the trailer, thereby assisting in braking of the vehicle and the towed trailer. With reference to FIG. 2, the electronic trailer brake 14 is constructed and arranged to provide a trailer brake output between 0 and 100%. Thus, upon the request signal 32 from the ECU, the trailer brake output 34 is forced to 100% of the value as set by the driver.

It can be appreciated that safety of vehicle/trailer trains can be improved by utilizing the electronic brake 14 on trailers or campers during EBS functions. As noted above, there are several situations when electric trailer performance can be enhanced by utilizing control functions from the EBS control module. Improved functions include but are not limited to: improved stopping performance under degraded vehicle conditions (failed circuit, low vacuum and faded brakes) by recognizing the degraded condition and shifting the trailer braking output to maximum decal/activation set by the driver; and improved stopping performance under panic brake conditions by activating Hydraulic Brake Assist with the trailer braking output shifting to max decal/activation set by the driver.

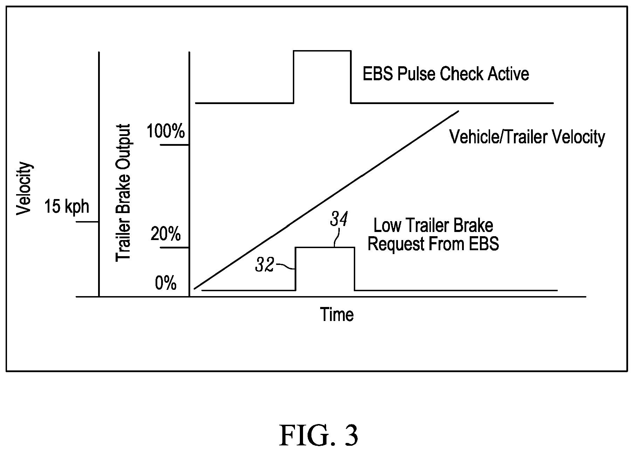

If a trailer has been sitting idle for a long time, rust may build-up on the trailer wheel brakes 17. Thus, in addition, the ECU 16 includes a trailer rust pulse recognition circuit 36 that recognizes drive-off of the vehicle with the trailer in tow. As the vehicle and trailer drive away, at a determined speed, the circuit 36 initiates a request signal 32' to the electronic trailer brake 14 to cause a quick activation of the trailer wheel brakes 17 to clean the rust off. This is a small force so it is not felt by the driver. FIG. 3 shows that as the vehicle and trailer drive off, the EBS 12, via request signal 32, causes the trailer wheels brakes 17 to activate for a short period of time at low output. In the example, the pulse-check occurs at a vehicle/trailer speed of 15 kph (tunable) and the trailer brake output 34 is 20% (tunable).

The operations described herein can be implemented as executable code stored on a computer or machine readable non-transitory tangible storage medium (e.g., floppy disk, hard disk, ROM, EEPROM, nonvolatile RAM, CD-ROM, etc.) that are completed based on execution of the code by a processor circuit implemented using one or more integrated circuits; the operations described herein also can be implemented as executable logic that is encoded in one or more non-transitory tangible media for execution (e.g., programmable logic arrays or devices, field programmable gate arrays, programmable array logic, application specific integrated circuits, etc.).

## Claims

1. A braking system for a vehicle and a trailer being towed by the vehicle, the braking system comprising: an electronic trailer brake constructed and arranged to control trailer wheel brakes of the trailer, and an electronic brake system (EBS) constructed and arranged to control wheel brakes of the vehicle, wherein the EBS comprising at least one circuit constructed and arranged to detect a function of the EBS and, in response to the detected function, to send a request signal to the electronic trailer brake instructing the electronic trailer brake to activate the trailer wheel brakes, **characterized in that**, the EBS further comprises a trailer pulse recognition circuit constructed and arranged to recognize drive-off of the vehicle with the trailer in tow, and to initiate a second request signal to the electronic trailer brake to cause activation of the trailer wheel brakes for a limited time to clean the trailer wheel brakes and wherein the electronic trailer brake is constructed and arranged to provide a trailer brake output between 0 and 100% and wherein the trailer pulse recognition circuit is constructed and arranged to initiate the second request signal when the vehicle speed is about 15 kph and wherein the electronic trailer brake is constructed and arranged, based on the second request signal, to cause activation of the trailer wheel brakes at a trailer brake output of about 20%.

2. The braking system of claim 1, wherein the at least one circuit includes a failed circuit recognition circuit constructed and arranged to detect, as the function, a failed circuit in the EBS.

3. The braking system of claim 1, wherein the at least one circuit includes a low vacuum recognition circuit that is constructed and arranged to determine, as the function, whether a low engine vacuum condition exists in the vehicle.

4. The braking system of claim 1, wherein the at least one circuit includes a faded brake recognition circuit constructed and arranged to determine, as the function, whether a faded brake condition exists in the vehicle.

5. The braking system of claim 1, wherein the at least one circuit includes a panic brake recognition circuit constructed and arranged to determine, as the function, whether an emergency or panic braking condition exists in the vehicle.

6. The braking system of claim 1, wherein the at least one circuit comprises: a failed circuit recognition circuit constructed and arranged to detect, as the function, a failed circuit in EBS, a low vacuum recognition circuit that is constructed and arranged to determine, as the function, whether a low engine vacuum condition exists in the vehicle, a faded brake recognition circuit constructed and arranged to determine, as the function, whether a faded brake condition exists in the vehicle, and a panic brake recognition circuit constructed and arranged to determine, as the function, whether an emergency or panic braking condition exists in the vehicle.

7. The braking system of claim 1, wherein the electronic trailer brake is constructed and arranged to provide a trailer brake output between 0 and 100% and upon receipt of the request signal, the electronic trailer brake is constructed and arranged to provide the output at 100% to activate the trailer wheel brakes to provide a maximum braking force.

8. A method of operating a braking system to cause braking of a vehicle and a trailer being towed by the vehicle, the braking system including an electronic trailer brake to control trailer wheel brakes of the trailer, and an electronic brake system (EBS) to control wheel brakes of the vehicle, the method comprising: detecting a function of the EBS, and in response to the detected function, sending a request signal to the electronic trailer brake instructing the electronic trailer brake to activate the trailer wheel brakes, **characterized in that**, the method comprising:
recognizing drive-off of the vehicle with the trailer in tow and upon the recognition of drive-off, causing activation of the trailer wheel brakes for a limited time to clean the trailer wheel brakes, wherein the electronic trailer brake is constructed and arranged to provide a trailer brake output between 0 and 100%, the method further comprising: causing the activation to occur when the vehicle speed is about 15 kph, with activation of the trailer wheel brakes being about 20% of the trailer brake output.

9. The method of claim 8, wherein detecting step includes detecting a failed circuit in the EBS.

10. The method of claim 8, wherein the detecting step includes determining whether a low engine vacuum condition exists in the vehicle.

11. The method of claim 8, wherein the detecting step includes determining whether a faded brake condition exists in the vehicle.

12. The method of claim 8, wherein the detecting step includes determining whether an emergency or panic braking condition exists in the vehicle.

13. The method of claim 8, wherein detecting step includes:
detecting a failed circuit in the EBS, determining whether a low engine vacuum condition exists in the vehicle, determining whether a faded brake condition exists in the vehicle, or determining whether an emergency or panic braking condition exists in the vehicle.

14. The method of claim 8, wherein the electronic trailer brake is constructed and arranged to provide an output signal to the trailer wheel brakes between 0 and 100% the method further comprising: upon receipt of the request signal, providing the output signal at 100% to activate the trailer wheel brakes to a provide maximum braking force.

## Patentansprüche

1. Bremssystem für ein Fahrzeug und für einen Anhänger, der von dem Fahrzeug gezogen wird, wobei das Bremssystem Folgendes umfasst: eine elektronische Anhängerbremse, die dazu ausgelegt und angeordnet ist, Anhänger-Radbremsen des Anhängers zu regeln, und ein elektronisches Bremssystem (EBS), das dazu ausgelegt und angeordnet ist, Radbremsen des Fahrzeugs zu regeln, wobei das EBS mindestens eine Schaltung umfasst, die dazu ausgelegt und angeordnet ist, eine Funktion des EBS zu detektieren und in Reaktion auf die detektierte Funktion ein Anforderungssignal an die elektronische Anhängerbremse zu senden, um die elektronische Anhängerbremse anzuweisen, die Anhänger-Radbremsen zu aktivieren, **gekennzeichnet dadurch, dass** das EBS ferner eine Erkennungsschaltung für einen Anhängerimpuls umfasst, die dazu ausgelegt und angeordnet ist, ein Wegfahren des Fahrzeugs mit dem Anhänger im Schlepp zu erkennen und ein zweites Anforderungssignal an die elektronische Anhängerbremse auszulösen, um eine Aktivierung der Anhänger-Radbremsen für eine begrenzte Zeit zu veranlassen, um die Anhänger-Radbremsen zu säubern, und wobei die elektronische Anhängerbremse dazu ausgelegt und angeordnet ist, eine Anhängerbremsleistung von zwischen 0 und 100 % bereitzustellen und wobei die Erkennungsschaltung für einen Anhängerimpuls dazu ausgelegt und angeordnet ist, das zweite Anforderungssignal auszulösen, wenn die Fahrzeuggeschwindigkeit etwa 15 km/h beträgt, und wobei die elektronische Anhängerbremse dazu ausgelegt und angeordnet ist, basierend auf dem zweiten Anforderungssignal eine Aktivierung der Anhänger-Radbremsen bei einer Anhängerbremsleistung von etwa 20 % zu veranlassen.

2. Bremssystem nach Anspruch 1, wobei die mindestens eine Schaltung eine Erkennungsschaltung für eine Fehlschaltung beinhaltet, die dazu ausgelegt und angeordnet ist, als Funktion eine Fehlschaltung im EBS zu detektieren.

3. Bremssystem nach Anspruch 1, wobei die mindestens eine Schaltung eine Erkennungsschaltung für ein niedriges Vakuum beinhaltet, die dazu ausgelegt und angeordnet ist zu bestimmen, ob als Funktion die Bedingung eines niedrigen Kraftmaschinenvakuums im Fahrzeug vorliegt.

4. Bremssystem nach Anspruch 1, wobei die mindestens eine Schaltung eine Erkennungsschaltung für Bremsschwund beinhaltet, die dazu ausgelegt und angeordnet ist zu bestimmen, ob als Funktion die Bedingung eines Bremsschwunds im Fahrzeug vorliegt.

5. Bremssystem nach Anspruch 1, wobei die mindestens eine Schaltung eine Erkennungsschaltung für eine Panikbremsung beinhaltet, die dazu ausgelegt und angeordnet ist zu bestimmen, ob als Funktion die Bedingung einer Notfall- oder Panikbremsung im Fahrzeug vorliegt.

6. Bremssystem nach Anspruch 1, wobei die mindestens eine Schaltung Folgendes umfasst: eine Erkennungsschaltung für eine Fehlschaltung, die dazu ausgelegt und angeordnet ist, als Funktion eine Fehlschaltung im EBS zu detektieren, eine Erkennungsschaltung für ein niedriges Vakuum, die dazu ausgelegt und angeordnet ist zu bestimmen, ob als Funktion die Bedingung eines geringen Kraftmaschinenvakuums im Fahrzeug vorliegt, eine Erkennungsschaltung für Bremsschwund, die dazu ausgelegt und angeordnet ist zu bestimmen, ob als Funktion die Bedingung eines Bremsschwunds im Fahrzeug vorliegt, und eine Erkennungsschaltung für eine Panikbremsung, die dazu ausgelegt und angeordnet ist zu bestimmen, ob als Funktion die Bedingung einer Notfall- oder Panikbremsung im Fahrzeug vorliegt.

7. Bremssystem nach Anspruch 1, wobei die elektronische Anhängerbremse dazu ausgelegt und angeordnet ist, eine Anhängerbremsleistung von zwischen 0 und 100 % bereitzustellen, und die elektronische Anhängerbremse bei Empfang des Anforderungssignals dazu ausgelegt und angeordnet ist, die Leistung zu 100 % zum Aktivieren der Anhänger-Radbremsen bereitzustellen, um eine maximale Bremskraft bereitzustellen.

8. Verfahren zum Betreiben eines Bremssystems, um ein Bremsen eines Fahrzeugs und eines von dem Fahrzeug gezogenen Anhängers zu veranlassen, wobei das Bremssystem Folgendes beinhaltet: eine elektronische Anhängerbremse zum Regeln der Anhänger-Radbremsen des Anhängers und ein elektronisches Bremssystem (EBS) zum Regeln der Radbremsen des Fahrzeugs, wobei das Verfahren Folgendes umfasst: Detektieren einer Funktion des EBS und in Reaktion auf die detektierte Funktion, Senden eines Anforderungssignals an die elektronische Anhängerbremse, um die elektronische Anhängerbremse anzuweisen, die Anhänger-Radbremsen zu aktivieren, **gekennzeichnet dadurch, dass** das Verfahren Folgendes umfasst:
Erkennen eines Wegfahrens des Fahrzeugs mit dem Anhänger im Schlepp und bei Erkennung des Wegfahrens, Veranlassen der Aktivierung der Anhänger-Radbremsen für eine begrenzte Zeit, um die Anhänger-Radbremsen zu säubern, wobei die elektronische Anhängerbremse dazu ausgelegt und angeordnet ist, eine Anhängerbremsleistung von zwischen 0 und 100 % bereitzustellen, wobei das Verfahren ferner umfasst: Veranlassen, dass die Aktivierung stattfindet, wenn die Fahrzeuggeschwindigkeit etwa 15 km/h beträgt, wobei die Aktivierung der Anhänger-Radbremsen etwa 20 % der Anhängerbremsleistung beträgt.

9. Verfahren nach Anspruch 8, wobei der Detektierungsschritt Detektieren einer Fehlschaltung im EBS beinhaltet.

10. Verfahren nach Anspruch 8, wobei der Detektierungsschritt Bestimmen, ob die Bedingung eines niedrigen Kraftmaschinenvakuums im Fahrzeug vorliegt, beinhaltet.

11. Verfahren nach Anspruch 8, wobei der Detektierungsschritt Bestimmen, ob die Bedingung eines Bremsschwunds im Fahrzeug vorliegt, beinhaltet.

12. Verfahren nach Anspruch 8, wobei der Detektierungsschritt Bestimmen, ob die Bedingung einer Notfall- oder Panikbremsung im Fahrzeug vorliegt, beinhaltet.

13. Verfahren nach Anspruch 8, wobei der Detektierungsschritt Folgendes beinhaltet:
Detektieren einer Fehlschaltung im EBS, Bestimmen, ob die Bedingung eines Kraftmaschinenvakuums im Fahrzeug vorliegt, Bestimmen, ob die Bedingung eines Bremsschwunds im Fahrzeug vorliegt, oder Bestimmen, ob die Bedingung einer Notfall- oder Panikbremsung im Fahrzeug vorliegt.

14. Verfahren nach Anspruch 8, wobei die elektronische Anhängerbremse dazu ausgelegt und angeordnet ist, ein Ausgangssignal an die Anhänger-Radbremsen von zwischen 0 und 100 % bereitzustellen, wobei das Verfahren ferner umfasst: bei Empfang des Anforderungssignals, Bereitstellen des Ausgangssignals bei 100 % zum Aktivieren der Anhänger-Radbremsen, um eine maximale Bremskraft bereitzustellen.

## Revendications

1. Système de freinage pour un véhicule et une remorque tractée par le véhicule, le système de freinage comprenant : un frein électronique de remorque construit et agencé pour commander les freins de roue de remorque de la remorque, et un système de freinage électronique (EBS) construit et agencé pour commander les freins de roue du véhicule, l'EBS comprenant au moins un circuit construit et agencé pour détecter une fonction de l'EBS et, en réponse à la fonction détectée, pour envoyer un signal de demande au frein électronique de remorque ordonnant au frein électronique de remorque d'activer les freins de roue de remorque,
**caractérisé en ce que** l'EBS comprend en outre un circuit de reconnaissance d'impulsions de remorque construit et agencé pour reconnaître le démarrage du véhicule avec la remorque en traction, et pour déclencher un second signal de demande au frein électronique de remorque pour provoquer l'activation des freins de roue de remorque pendant un temps limité pour nettoyer les freins de roue de remorque, et le frein électronique de remorque étant construit et agencé pour fournir une sortie de frein de remorque entre 0 et 100 %, et le circuit de reconnaissance d'impulsions de remorque étant construit et agencé pour déclencher le second signal de demande lorsque la vitesse du véhicule est d'environ 15 km/h, et le frein électronique de remorque étant construit et agencé, sur la base du second signal de demande, pour provoquer l'activation des freins de roue de remorque à une sortie de frein de remorque d'environ 20 %.

2. Système de freinage selon la revendication 1, l'au moins un circuit comprenant un circuit de reconnaissance de circuit défectueux construit et agencé pour détecter, comme fonction, un circuit défectueux dans l'EBS.

3. Système de freinage selon la revendication 1, l'au moins un circuit comprenant un circuit de reconnaissance de faible vide qui est construit et agencé pour déterminer, comme fonction, s'il existe un état de faible vide moteur dans le véhicule.

4. Système de freinage selon la revendication 1, l'au moins un circuit comprenant un circuit de reconnaissance de freinage déréglé construit et agencé pour déterminer, comme fonction, si un état de freinage déréglé existe dans le véhicule.

5. Système de freinage selon la revendication 1, l'au moins un circuit comprenant un circuit de reconnaissance de frein de secours construit et agencé pour déterminer, comme fonction, s'il existe un état de freinage d'urgence ou de secours dans le véhicule.

6. Système de freinage selon la revendication 1, l'au moins un circuit comprenant : un circuit de reconnaissance de circuit défectueux construit et agencé pour détecter, comme fonction, un circuit défectueux dans l'EBS, un circuit de reconnaissance de faible vide qui est construit et agencé pour déterminer, comme fonction, s'il existe un état de faible vide moteur dans le véhicule, un circuit de reconnaissance de frein déréglé construit et agencé pour déterminer, comme fonction, s'il existe un état de frein déréglé dans le véhicule et un circuit de reconnaissance de frein de secours construit et agencé pour déterminer, comme fonction, s'il existe un état de freinage d'urgence ou de secours dans le véhicule.

7. Système de freinage selon la revendication 1, le frein électronique de remorque étant construit et agencé pour fournir une sortie de frein de remorque comprise entre 0 et 100 % et, lors de la réception du signal de demande, le frein électronique de remorque étant construit et agencé pour fournir la sortie à 100 % pour activer les freins de roue de remorque pour fournir une force de freinage maximale.

8. Procédé de fonctionnement d'un système de freinage pour provoquer le freinage d'un véhicule et d'une remorque tractée par le véhicule, le système de freinage comprenant un frein électronique de remorque pour commander les freins de roue de remorque, et un système de freinage électronique (EBS) pour commander les freins de roue du véhicule, le procédé comprenant : la détection d'une fonction de l'EBS, et en réponse à la fonction détectée, l'envoi d'un signal de demande au frein électronique de remorque ordonnant au frein électronique de remorque d'activer les freins de roue de remorque, **caractérisé en ce que** le procédé comprend : la reconnaissance du démarrage du véhicule avec la remorque en traction et lors de la reconnaissance du démarrage, l'activation des freins de roue de remorque pendant un temps limité pour nettoyer les freins de roue de remorque, le frein électronique de remorque étant construit et agencé pour fournir une sortie de frein de remorque entre 0 et 100 %, le procédé comprenant en outre : le fait de provoquer l'activation lorsque la vitesse du véhicule est d'environ 15 km/h, l'activation des freins de roue de remorque étant d'environ 20 % de la sortie de frein de remorque.

9. Procédé selon la revendication 8, l'étape de détection comprenant la détection d'un circuit défectueux dans l'EBS.

10. Procédé selon la revendication 8, l'étape de détection comprenant la détermination du fait de savoir s'il existe un état de faible vide moteur dans le véhicule.

11. Procédé selon la revendication 8, l'étape de détection comprenant la détermination du fait de savoir s'il existe un état de freinage déréglé dans le véhicule.

12. Procédé selon la revendication 8, l'étape de détection comprenant la détermination du fait de savoir s'il existe un état de freinage d'urgence ou de secours dans le véhicule.

13. Procédé selon la revendication 8, l'étape de détection comprenant : la détection d'un circuit défectueux dans l'EBS, la détermination du fait de savoir s'il existe un état de faible vide moteur dans le véhicule, la détermination du fait de savoir s'il existe un état de frein déréglé dans le véhicule ou la détermination du fait de savoir s'il existe un état de freinage d'urgence ou de secours dans le véhicule.

14. Procédé selon la revendication 8, le frein électronique de remorque étant construit et agencé pour fournir un signal de sortie aux freins de roue de remorque entre 0 et 100 %, le procédé comprenant en outre : lors de la réception du signal de demande, la fourniture du signal de sortie à 100 % pour activer les freins de roue de remorque afin de fournir une force de freinage maximale.
